# FASCICULE DE BREVET EUROPEEN

(11) **EP 1 004 194 B1**
(45) Date de publication et mention de la délivrance du brevet: **08.10.2008**
(21) Numéro de dépôt: 98941529.4
(22) Date de dépôt: 03.08.1998
(51) Int. Cl.: H04L 29/06, G06F 1/00

(54) **PROCEDE ET DISPOSITIFS POUR LA GESTION DE TRANSFERTS D'INFORMATIONS**
VERFAHREN UND VORRICHTUNGEN ZUR VERWALTUNG VON INFORMATIONSÜBERTRAGUNGEN
METHOD AND DEVICES FOR MANAGING DATA TRANSFER

(30) Priorité: 12.08.1997 FR 9710281
(43) Date de publication de la demande: 31.05.2000
(73) Titulaire: Maton, Gilles, 75011 Paris (FR)
(72) Inventeur: Maton, Gilles, 75011 Paris (FR)
(86) Numéro de dépôt international: PCT/FR1998/001729
(87) Numéro de publication internationale: WO 1999/008428

(56) Documents cités:
- EP-A- 0 715 247
- EP-A- 0 778 512
- EP-A- 0 778 513
- WO-A-96/08759
- TANENBAUM A S: "COMPUTER NETWORKS, PASSAGE" COMPUTER NETWORKS,1981, pages 636-641, XP002053855 TANENBAUM A S

## Description

La présente invention concerne un procédé et des dispositifs pour la gestion de transferts d'informations.

### Etat de la technique

On observera en premier lieu que l'on entend ici par programme toute sorte d'information diffusée sous forme numérique, qu'il s'agisse par exemple de programmes informatiques fournis sur un réseau de type Internet, ou de programmes cinématographiques ou télévisuels distribués par câble ou par voie hertzienne terrestre ou par satellite ou sur tout autre support.

On connaît par le document EP-A-O 778 512 un procédé de fourniture par un serveur à un tiers quelconque, a priori non autorisé, d'une version non exécutable d'un logiciel protégé. Après vérification d'une éventuelle autorisation, un programme utilitaire également fourni par le serveur génère une version exécutable à partir de la version non exécutable. Cette version exécutable n'existe que le temps de son exécution, et uniquement en mémoire volatile, de sorte que l'utilisateur n'y a pas accès.

On connaît également par le document EP-A-O 778 513 un procédé de fourniture d'informations numériques multimédia dans lequel on ajoute à ces informations des informations de contrôle. Un gestionnaire de copyright permet de gérer les droits d'usage. Plus particulièrement, ce document décrit un procédé selon le préambule de la revendication 1.

Toutefois, dans ce procédé comme dans tous les procédés connus de transferts d'informations, les programmes et les lecteurs de programmes fixes ou mobiles, portables ou non, sont dans l'incapacité de fournir ou de traiter de l'information d'identification et d'exploitation en interactivité de gestion. Il en résulte pour le producteur de contenus une faible traçabilité de l'emploi de ses productions pendant leurs exploitations.

Devant la multiplication des moyens de diffusion conjuguée à l'internationalisation des fournisseurs de programmes, il est important d'implanter dans les terminaux des principes d'accès dont la capacité de traitement d'applications est plus précise, mieux sécurisée et adaptée aux besoins exacts des utilisateurs. Les opérateurs de services d'informations n'ont qu'un retour partiel sur des opérations ou des applications qui ne sont pas compatibles en matière de support, ce qui est en contradiction avec la gestion des techniques de l'information qu'impose la mondialisation. Ces cloisonnements ont également pour effet de limiter l'accès aux programmes et donc d'en accroître le coût d'exploitation et la durée d'amortissement. De plus, les copies pirates des éléments de programmes sur des supports, électroniques par exemple, ne peuvent pas être suivies et contrôlées efficacement par les ayants droit.

Par exemple, dans les activités de télévision, à péage ou non, il n'existe pas de moyen de contrôle a posteriori des transactions unitaires de programmes. Par ailleurs, lorsque des échanges transactionnels sont activés, les données confidentielles sont exposées lors du dialogue de liaison. De plus, il est impossible de permettre l'identification des programmes ou de localiser les terminaux, quel que soit le support ou le vecteur d'information employé.

Les systèmes de gestion actuels sont partiels et n'autorisent pas d'ouverture hiérarchisée en fonction des impératifs qui l'accompagnent, tant au niveau technique que juridique. La traçabilité totale est irréalisable parce que le programme et le terminal sont dépourvus d'identifiant et que le seul contrôle d'accès disponible qui prévaut avec le terminal est une porte active ou passive fonctionnant avec une clef simplifiée. L'emploi de terminaux et la lecture du programme dans des zones géographiques où le diffuseur n'a pas acquis les droits d'exploitation de l'oeuvre est donc possible! Cette problématique est également présente dans la distribution des programmes vidéo, qui doit aussi répondre aux obligations réglementaires et à la chronologie de diffusion du pays où l'oeuvre est exploitée. Pour qu'un programme soit diffusé de façon massive à l'échelle d'un continent ou du monde, il doit comporter ses propres informations d'identification, capables d'être gérées par un terminal localisable en relation avec un centre de gestion approprié.

La présente invention vise à résoudre les problèmes exposés ci-dessus.

### Exposé de l'invention

A cet effet, l'invention a tout d'abord pour objet un procédé selon la revendication 1.

Les données de codage communes au centre de gestion et au terminal de lecture sont de préférence personnelles, au moins partiellement confidentielles pour l'utilisateur, et jamais totalement exposées au profit d'un tiers. Au moins une partie de ces données est donc fournie au terminal préalablement à sa mise en fonction, indépendamment de toute communication ouverte.

Les transmissions entre le terminal de lecture et le centre de gestion seront généralement réalisées sur un réseau dont l'architecture peut être exposée à toute intervention extérieure, donc non sécurisé.

On dispose donc de trois niveaux de sécurité au moins.

En premier lieu, les données de codage fournies au terminal lors de son initialisation ne sont connues que du centre de gestion. Elles peuvent en particulier tenir compte de la localisation géographique du terminal de sorte que les autorisations données ultérieurement pourront dépendre de cette localisation.
Par ailleurs, les autorisations de lecture, qui seront généralement transmises ponctuellement au terminal sur un réseau ouvert, sont elles-mêmes codées et personnalisées de façon que seul un terminal particulier puisse les interpréter en fonction des données de codage qui lui ont été fournies.

Enfin, chaque programme possède un identifiant qui permettra sa lecture par un terminal particulier uniquement si, d'une part, l'autorisation de lecture a été donnée par le centre de gestion et si, d'autre part, cette autorisation a été convenablement interprétée au moyen des données de codage.

Ainsi, le centre de gestion qui a été informé, généralement de façon confidentielle, de la lecture d'un programme particulier pourra ultérieurement en assurer la facturation et le recouvrement du montant correspondant, puis la répartition des droits entre autres avec les différents ayants droit ou parties intéressées. On observera que, de préférence, le terminal conserve également en mémoire une trace des actions effectuées, afin de permettre une vérification sur site de l'exactitude des transactions.

Des éléments périphériques fixes ou mobiles peuvent être servis par les capacités du terminal pour des autorisations de lecture accordées par les ayants droit sur ce type de matériel.

L'invention permet donc de contrôler les échanges électroniques en maintenant le secret et l'anonymat de la transaction quel que soit le support utilisé. Le procédé de l'invention gère en permanence des données inconnues à tous sauf du centre de gestion de manière que les informations confidentielles indispensables au fonctionnement ne soient jamais disponibles ou exposées sur les moyens de communication employés. Les informations restantes, qui sont exposées, deviennent alors inutilisables car partiellement amputées, et donc incohérentes pour un fraudeur. Les transactions effectuées peuvent être authentifiées par le centre de gestion et le terminal.

Le programme contient des éléments auxiliaires identifiants permettant l'exécution ou non des services demandés par l'utilisateur du terminal. Le terminal calque ses capacités de distribution sur les scénarios possibles que lui propose le programme et, le cas échéant, l'accès à celui-ci que peut contrôler indirectement le centre de gestion. Le terminal dispose d'une mémoire sécurisée dont les capacités informatiques sont pour partie chargées directement lors de son initialisation en correspondance avec le centre de gestion. Dans le cas où le centre de gestion reçoit un ordre entrant de la part du terminal, un téléchargement des capacités mémoire de ce dernier peut être activé pour recevoir les instructions faisant réponse à l'interrogation. Les capacités applicatives du terminal et sa mémoire permettent le traitement de l'information en autonomie, quel qu'en soit le support, sans nécessiter l'emploi d'une liaison permanente avec le centre de gestion. Pour des applications plus spécifiques, une liaison simplifiée directe interactive peut être sollicitée par le terminal vers le centre de gestion. Dans le cas d'applications nécessitant des capacités plus importantes, des mémoires additives peuvent être accueillies par le terminal. Le terminal est toujours localisable par le centre de gestion qui contrôle à la demande l'adresse du terminal et le crédit des utilisateurs, en toute confidentialité lors de l'utilisation des capacités. Le terminal et le centre de gestion disposent d'informations initiales secrètes dont ils sont les seuls gestionnaires, en correspondance avec les coordonnées électronique et téléphonique complètes de l'utilisateur du terminal.

La présente invention propose donc un procédé de traitement multi-applicatif d'un terminal localisable, personnalisé ou non, dans lequel on réalise au moins une liaison avec un programme identifiable dédié à l'exécution d'une application, ledit programme dictant ses conditions d'exploitation, technique ou non technique, au terminal pour la mise à disposition des fonctions. Le terminal dialogue ponctuellement, par l'emploi d'une liaison simplifiée à bas débit avec le centre de gestion, pour la réalisation, si nécessaire, des entrées et sorties des capacités de ce dernier, le centre de gestion devenant esclave ou non du terminal au niveau de l'applicatif vis-à-vis du programme entrant. L'invention concerne également le procédé d'identification du programme et du terminal en exploitation.

Le programme présente au terminal un ordre d'identification, puis le terminal récupère un ordre applicatif à exécuter en fonction de cet ordre d'identification. Le terminal interprète les ordres applicatifs que lui dicte ponctuellement le centre de gestion, réalise les opérations y attenant et les acquitte. Dans le cas où l'identification du programme nécessite une réponse applicative de la part du centre de gestion, le terminal présente au centre de gestion un ordre entrant comprenant la réponse applicative qui fait office d'ordre applicatif d'interrogation à exécuter auprès du centre de gestion. Le centre de gestion dialogue avec le terminal pour la mise à disposition des entrées et des sorties de celui-ci. Dans le cas contraire, l'unité centrale du terminal gère en autonomie les instructions programmées et mémorise les entrées et sorties exécutées afin de les distribuer lors d'une interrogation ultérieure du centre de gestion ou de l'utilisateur. Ces solutions sont applicables quel que soit le médium ou le support du programme. Elles résolvent le problème du cloisonnement des différents vecteurs d'informations.

Le champ d'application d'un tel procédé est très vaste, puisque l'on peut utiliser les capacités d'exploitation du terminal pour des programmes non identifiés, l'application étant alors transparente, et pour des programmes identifiés, destinés à être connectés à un terminal distant ou non du traitement de l'information, fixe ou mobile, portable ou non, en rapport ou non avec le centre de gestion.

L'invention concerne également le procédé d'identification du programme, un terminal localisable et un centre de gestion fixes ou mobiles, portables ou non, comportant chacun une unité centrale reliée à plusieurs ensembles périphériques tel qu'un fichier, un clavier, un modem, un émetteur DTMF, un module d'interface réseau NIM (Network Interface Module) et un moniteur. Plusieurs centres de gestion connectés en réseau peuvent, en synergie, traiter les applications attenantes aux terminaux.

En cas de duplication ou de diffusion d'un programme par le terminal, celui-ci peut ajouter aux données copiées ou diffusées sur le nouveau support un code identifiant en rapport avec les coordonnées d'adressage du terminal. Ainsi, un nouvel usage du programme copié pourra non seulement bénéficier aux ayants droit d'origine, mais également à l'émetteur de la copie ou de la diffusion, qui interviendra alors comme distributeur intermédiaire.

### Brève description des dessins

- La figure 1 illustre une session d'échange selon le procédé d'invention.
- La figure 2 illustre un terminal en liaison avec un centre de gestion et un programme identifiable.

### Exposé détaillé de modes de réalisation

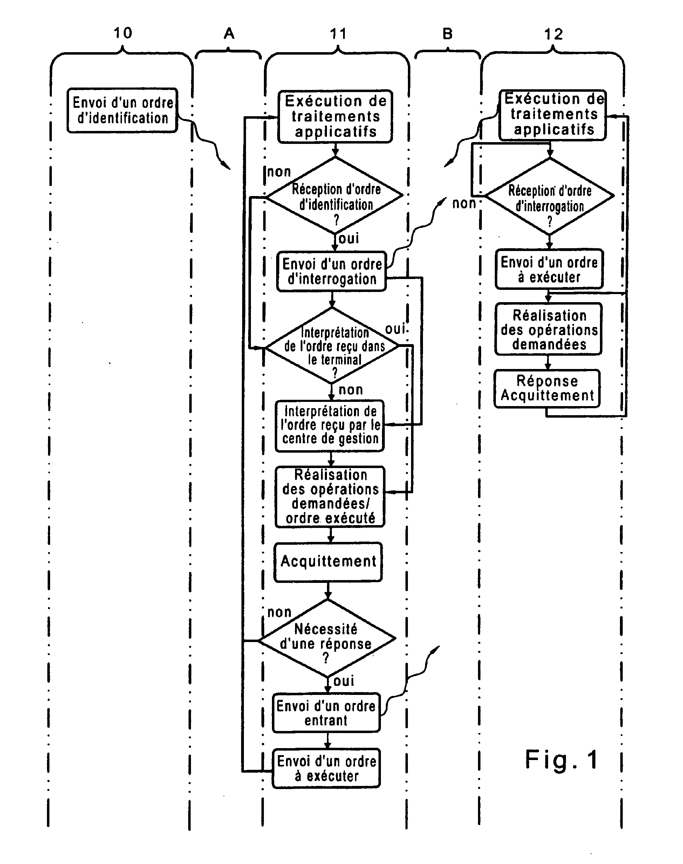

Le procédé de l'invention, illustré sur la figure 1, est un procédé de traitement multi-applicatif d'un terminal localisable (11), personnalisé ou non, dans lequel on réalise au moins une liaison (A) avec un programme identifiable (10) dédié à l'exécution d'une application, ledit programme dictant ses conditions d'exploitation, technique ou non technique, au terminal (11) pour la mise à disposition des fonctions. Le terminal dialogue directement ou ponctuellement, par l'emploi d'une liaison simplifiée (B), avec le centre de gestion (12) pour la réalisation, si nécessaire, des entrées et sorties des capacités de ce dernier, le centre de gestion (12) devenant esclave ou non du terminal (11) au niveau de l'applicatif vis-à-vis du programme (10) entrant.

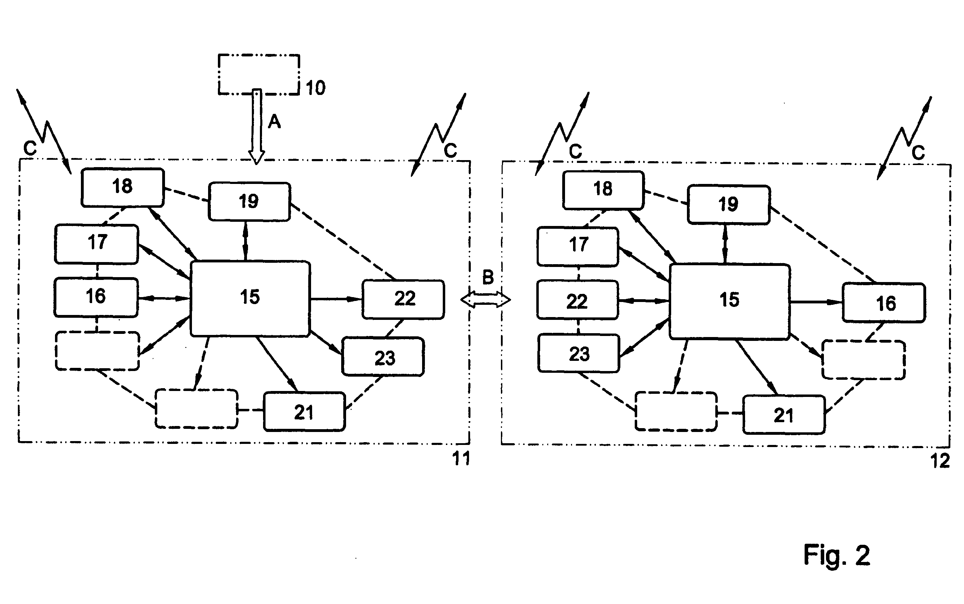

La figure 2 illustre un terminal (11) selon l'invention en liaison (A) avec un programme identifiable ou non (10) et en liaison (B) avec le centre de gestion (12). Le terminal (11) et le centre de gestion (12) comprennent une unité centrale (15) en liaison avec plusieurs éléments périphériques tels que, notamment, un fichier (16), un clavier (17), un modem (18), un émetteur multifréquences DTMF (19) permettant des liaisons (B) avec le centre de gestion (12), une liaison (A) avec le programme (10), un afficheur (21), un module d'interface réseau NIM ou Network Interface Module (22), un moniteur (23) et des liaisons (C) avec l'extérieur...

Le programme (10) soumet un ordre d'identification au terminal (11) qui autorise ou non la lecture et qui dialogue si nécessaire avec le centre de gestion (12) pour la mise à disposition des entrées et sorties des capacités du terminal (11). Les dispositions à prendre sont la définition des ordres d'identification et des entrées et sorties, ainsi que la normalisation de ces ordres entre les fabricants de terminaux et les producteurs de programmes. Un prestataire de services désireux de construire une application, nécessitant de la sécurité ou non, peut élaborer et diffuser un programme identifié à son ou ses services. Dans une telle configuration, illustrée sur la figure 1, le terminal (11) devient esclave, au niveau de l'applicatif, vis-à-vis du programme (10) avec lequel se déroulent l'application et le dialogue éventuel avec le terminal (11) et le centre de gestion (12). Lors de la lecture du programme (10) par le terminal (11), la fonction applicative à engager est détectée par le terminal (11). Un ordre d'identification et d'interrogation entrant est généré dans le terminal afin de récupérer, à l'aide de deux ordres sortants, un ordre applicatif à exécuter. Les ordres applicatifs sont aux formats T (type), L (longueur) et V (valeur). Le mécanisme d'extraction de l'application du programme (10) est ainsi enclenché. Le terminal (11) interprète les ordres applicatifs, réalise les opérations y attenant et les acquitte. Dans le cas où l'ordre d'identification du programme (10) nécessite une réponse applicative de la part du centre de gestion (12), le terminal (11) présente au centre de gestion (12) un ordre entrant comprenant la réponse applicative aux formats T, L, V et reçoit, après interrogation et autorisation du centre de gestion (12), une réponse qui fait office d'ordre applicatif pour l'autorisation de l'action à exécuter. Dans le cas contraire, le terminal (11) est toujours demandeur d'une action applicative à réaliser à l'aide d'un ordre applicatif d'interrogation en rapport avec l'identité du programme. Tous les actes identifiables sont enregistrés et mémorisés par le terminal (11) en autonomie afin d'être disponibles pour une collecte ultérieure d'informations émanant du centre de gestion (12). Le terminal (11) et le centre de gestion (12) disposent d'une mémoire et comprennent chacun au moins un microprocesseur.

On va à présent décrire une session d'échange selon l'invention.

Les ordres nécessaires à la réalisation des opérations décrites ci-dessus sont :
- l'identification du programme (10) par le terminal (11), pour permettre l'interrogation. Cet ordre provoque les acquittements nécessaires au niveau du terminal (11) et, le cas échéant, une demande d'interrogation applicative supplémentaire au sein du centre de gestion (12). L'ordre d'identification permet de lire le type (T) et la longueur (L) de l'ordre applicatif à réaliser. Il est obligatoirement suivi de l'ordre lecture applicative de valeur (V).
- la lecture applicative (V). Cet ordre complète l'ordre précédent. Il permet de recueillir des données associées au type (T) et à la longueur (L) recueillis précédemment.

Les valeurs des ordres écriture applicative, lecture applicative (T, L) et lecture applicative (V) sont à normaliser entre les constructeurs de terminaux et les producteurs d'applications. Les ordres et les acquittements applicatifs sont liés à l'exploitation des ressources d'entrées et sorties du terminal et du centre de gestion, en rapport avec le programme. Ils se présentent aux formats TLV (type, longueur, valeur) et peuvent prendre des contenus qu'il conviendra de définir en fonction des applications.

Une application est un enchaînement d'ordres applicatifs entrants et parfois sortants. On peut noter qu'elle commence toujours de la même façon, à l'aide d'un ordre applicatif d'identification, et qu'elle se termine par un ordre applicatif de fin. Le champ d'application d'un tel enchaînement d'ordres est très vaste, puisque l'on peut l'utiliser pour des programmes identifiés ou non, en relation avec des terminaux localisés ou non, personnalisés ou non, portables ou non, connectés ou non à un centre distant de traitement de l'information fixe ou mobile, portable ou non.

Pour illustrer le propos, on va analyser le cas d'un programme identifié lu par un terminal nécessitant une autorisation d'exploitation de la part du centre de gestion. Le cas présenté est volontairement simplifié de façon à réduire les fonctionnalités à décrire.

Le dialogue pour guider l'utilisateur se fait vocalement. L'utilisateur peut, à l'aide des touches du clavier, faire parvenir les informations au serveur vocal sous forme DTMF (Dual Tone Multifrequency). Le programme peut émettre des informations d'identification qui vont être directement transmises au terminal. Le terminal a la capacité de synchroniser une application avec le centre de gestion, qui devient alors serveur au niveau de l'applicatif.

### Description du service

Un prestataire de services oeuvrant dans le domaine de la distribution de programmes télévisés propose à ses clients fidèles (qui possèdent une ligne de crédit chez lui) la possibilité de faire lire ses programmes par le terminal fonctionnant en DTMF auprès de son serveur. Pour affecter de façon sûre le coût de lecture ou d'exploitation de son programme, il a besoin d'identifier ses clients. De même, ses clients ont besoin de disposer d'une preuve sur leur engagement. Le prestataire de services décide de leur fournir une ligne de crédit, qui est aussi un code d'accès au programme diffusé, leur permettant de réaliser les transactions nécessaires. Pour pouvoir réaliser ces traitements, le programme doit être identifié et le terminal doit être couplé à un centre de gestion.

### Mise en oeuvre

On suppose que l'identification se fait automatiquement dans le terminal. L'utilisateur demande la lecture du programme par son terminal. Celui-ci identifie le programme et le compare à sa base de données pour déclencher le processus de mise à disposition en rapport avec le centre de gestion. Le programme et le terminal pilotent l'échéancier des opérations et le contrôle d'accès s'opère grâce à l'intervention du centre de gestion qui vérifie si le programme peut être distribué dans la zone où le terminal est exploité et, bien entendu, contrôle la ligne de crédit de l'utilisateur pour la mise à disposition de l'application. Après émission des autorisations, l'ordre de lecture du programme est accordé au terminal par le centre de gestion. Les transactions sont mémorisées par le centre de gestion et par le terminal qui disposent en outre d'un protocole d'accès sécurisé personnalisé.

L'abonné, le centre de gestion et le programme définissent un jeu de codes convolutifs que seul le terminal est capable de mettre en oeuvre, ce qui augmente l'immunité au piratage au fur et à mesure du développement et de la diversification des activités. L'unité centrale du terminal contient de l'intelligence afin de gérer les protocoles de manière centralisée. Le centre de gestion peut ponctuellement télécharger des informations permettant une identification autonome de la part du terminal, grâce à une allocation de la mémoire dédiée à cette application, ce qui permet de cloisonner des applications en fonction d'une zone géographique, d'un type d'utilisateur ou d'un type d'application préalablement définis.

Afin d'obtenir un système suffisamment flexible et évolutif, les cartes numériques utilisées avec l'unité centrale sont constituées principalement de mémoires et de composants programmables. Le contrôleur du système se charge de récupérer le flux et de l'écrire temporairement dans une partie de la mémoire externe. Il assure la relecture des données, le tri et la synchronisation des données de codage. L'interface mémoire gère l'adressage et le contrôle de la mémoire externe en fonction des demandes d'accès des différents blocs. Le signal initial est transposé lors d'un pré traitement afin de formater les données du flux entrant ; cela ne nécessite que quelques composants supplémentaires.

La transmission de télévision, par exemple, du programme vers le terminal, ne requérant pas un module bidirectionnel, le signal descendant à haut débit ne comprend qu'une partie unidirectionnelle et la partie montante bidirectionnelle du terminal vers le centre de gestion et du centre de gestion vers le terminal peut utiliser un faible débit (réseau téléphonique commuté classique). L'abonné sera connecté au reste du monde par un module d'interface réseau unique (le NIM ou Network Interface Module) introduit pour la voie de retour pour un rapport performance/complexité optimal, le terminal offrant une combinaison variée de plusieurs fonctionnalités et l'interopérabilité entre les différents réseaux.

La mise en oeuvre de plusieurs protocoles d'accès différents qui permettent de supporter une grande variété de services sera possible : vidéo à la demande, télé-enseignement, téléphonie ou échange de données, considérés comme des services de base, mais aussi des services tels que les sondages, les jeux, le télé-achat, le télé-marketing, les services bancaires, etc. Stocker, transmettre, synchroniser, multiplexer, modifier, brouiller dans un équipement multiservices évolutif proposant des solutions intégrées à bon marché va permettre de réduire le coût de l'ensemble des opérations transactionnelles. Ce nouveau concept de distribution multimédia peut être adapté à tous les supports et notamment aux applications câbles et satellites, sans modifier fondamentalement les infrastructures en place.

### Déroulement d'une session

Le programme identifié, dédié à l'application du terminal, contient, outre les données d'identification et ses secrets, le déclenchement de l'application qu'il déroule de façon synchronisée, avec le terminal et le centre de gestion associé (en fait, il pilote, par-delà le terminal, les instructions du centre de gestion).

Ordres TLV nécessaires à une telle session (la liste suivante des ordres possibles est donnée à titre d'exemple) :
- introduction du programme
- identification du programme par le terminal
- émission DTMF par le terminal vers le centre de gestion
- acquittement (état acquitté)
- demande de saisie
- saisie
- fin de session

*L'utilisateur met en fonction son terminal et demande la lecture du programme.*

| | |
|---|---|
| Lecture du type de programme | Type de programme |
| Lecture applicative TL | TL |
| Lecture applicative V | V |

*Le programme met à la disposition du terminal son identification.*

| | |
|---|---|
| Ecriture applicative TLV | |
| Lecture applicative TL | TL (demande - saisie [brouillée]) |
| Lecture applicative V | V (demande - saisie [brouillée]) |

*Le terminal accueille le programme et demande à l'utilisateur de saisir son code confidentiel.*
**Ecriture applicative TLV (saisie [résultat de saisie])**

*Le terminal vérifie le code confidentiel. S'il est correct, on continue.*
**Lecture applicative TL TL (émission DTMF [code confidentiel correct])**
**Lecture applicative V V (émission DTMF [code confidentiel correct])**

*Le terminal reçoit le code pour acceptation du centre de gestion permettant la poursuite de l'opération. Il continue son application.*

| | |
|---|---|
| Ecriture applicative TLV (acquittement [état]) | |
| Lecture applicative TL | TL (demande saisie [claire]) |
| Lecture applicative V | V (demande saisie [claire]) |

*Le terminal demande la saisie de l'identification du programme. L'identification faite par le terminal remonte en écho vers le centre de gestion*.

| | |
|---|---|
| Ecriture applicative TLV (saisie [résultat de saisie]) | La mémoire du terminal et celle du centre de gestion stockent ce résultat |
| Lecture applicative TL | TL (demande saisie [claire]) |
| Lecture applicative V | V (demande saisie [claire]) |

*Le terminal et le centre de gestion demandent la saisie de l'identification du programme que l'utilisateur consulte*.
**Ecriture applicative TLV (saisie [résultat de saisie])**

*Les cartes mémoire du terminal et du centre de gestion stockent ce résultat.*
**Lecture applicative TL TL (demande saisie [claire])**
**Lecture applicative V V (demande saisie [claire])**

*Le terminal et le centre de gestion demandent la saisie du montant de la transaction pour la lecture du programme*.

| | |
|---|---|
| Ecriture applicative TLV (saisie [résultat de saisie]) | Le terminal stocke ce résultat. Il calcule avec le centre de gestion un certificat sur ces trois éléments |
| Lecture applicative TL | TL (émission DTMF [certificat, numéro d'abonné]) |
| Lecture applicative V | V (émission DTMF [certificat, numéro d'abonné]) |

*Le terminal reçoit le certificat et le numéro d'abonné présents au niveau du centre de gestion. Il remercie le client. La transaction est terminée.*

| | |
|---|---|
| Ecriture applicative TLV (acquittement [état]) | |
| Lecture applicative TL | TL (fin de session []) |
| Lecture applicative V | V (fin de session []) |

*Le terminal attend une nouvelle intervention de l'utilisateur commencer une autre application.*

## Revendications

1. Procédé pour la gestion de transferts d'informations d'un moyen de diffusion à un terminal (11) de lecture, notamment localisable, dans lequel on transmet audit terminal (11) de lecture des informations pour le contrôle d'informations de programme (10), **caractérisé par le fait qu'**il comprend les étapes consistant à :
- fournir audit terminal (11) de lecture par un centre de gestion (12), lors d'une initialisation, des données de codage personnalisées ;
- transmettre audit terminal (11) de lecture à partir dudit centre de gestion (12), des informations codées sur des autorisations de lectures de programmes ;
- faire interpréter lesdites informations codées par ledit terminal (11) de lecture en utilisant lesdites données de codage ;
- lors de la présentation d'un programme (10) audit terminal (11) de lecture, faire vérifier par le terminal (11) qu'il est autorisé à lire ce programme (10), en fonction des informations interprétées et d'un code d'identification accompagnant ledit programme (10) ;
- faire lire le programme (10) par ledit terminal (11) de lecture s'il y est autorisé ;
et
- après lecture du programme (10), faire informer ledit centre de gestion (12) par ledit terminal (11) des opérations effectuées.

2. Procédé selon la revendication 1, **caractérisé en ce que** le programme (10) présente au terminal (11) un ordre applicatif d'identification, **en ce que** le terminal (11) donne un ordre applicatif à exécuter, réalise les opérations y attenant et les acquitte.

3. Procédé selon la revendication 2, **caractérisé en ce que**, dans le cas où l'ordre applicatif nécessite une réponse applicative du centre de gestion (12), le terminal (11) présente au centre de gestion (12) un ordre applicatif entrant comprenant la réponse applicative qui fait office d'ordre applicatif d'interrogation pour la prochaine action applicative à exécuter.

4. Procédé selon la revendication 2, **caractérisé en ce que**, dans le cas où l'ordre applicatif ne nécessite aucune réponse applicative de la part du centre de gestion (12), le terminal (11) est toujours demandeur d'action à réaliser à l'aide de l'identification du programme (10) par le centre de gestion (12).

5. Procédé selon l'une quelconque des revendications précédentes, **caractérisé en ce que** les ordres applicatifs sont aux formats T (type), L (longueur) et V (valeur).

6. Procédé selon la revendication 1, **caractérisé en ce que** le terminal (11) et le centre de gestion (12) disposent d'une mémoire et comprennent chacun au moins un microprocesseur.

7. Procédé selon l'une des revendications précédentes **caractérisé en ce que** les données de codage communes au centre de gestion (12) et au terminal (11) de lecture sont personnelles, au moins partiellement confidentielles pour l'utilisateur, et jamais totalement exposées au profit d'un tiers, au moins une partie de ces données étant fournie au terminal (11) préalablement à sa mise en fonction, indépendamment de toute communication ouverte.

8. Procédé selon l'une des revendications précédentes **caractérisé en ce qu'**il comprend la gestion permanente des données inconnues à tous sauf du centre de gestion (12) de manière que les informations confidentielles indispensables au fonctionnement ne soient jamais disponibles ou exposées sur les moyens de communication employés, les informations restantes, qui sont exposées, devenant alors inutilisables car partiellement amputées, et donc incohérentes pour un fraudeur, les transactions effectuées étant authentifiées par le centre de gestion (12) et le terminal (11).

9. Procédé selon l'une des revendications précédentes **caractérisé en ce que** le programme (10) identifié, dédié à l'application du terminal (11), contient, outre les données d'identification et ses secrets, le déclenchement de l'application qu'il déroule de façon synchronisée, avec le terminal (11) et le centre de gestion (12).

10. Système comprenant un centre de gestion (12) et au moins un terminal (11) comportant des moyens pour la mise en oeuvre du procédé, selon la revendication 1, **caractérisé en ce qu'**il est apte à établir une liaison (B) entre ledit centre de gestion (12) et ledit terminal (11) dédié à l'exécution d'une application.

11. Système selon la revendication 10, **caractérisé en ce qu'**il comprend une unité centrale reliée à plusieurs ensembles périphériques.

12. Système selon la revendication 10, **caractérisé en ce que** lesdits éléments périphériques sont fixes ou mobiles et sont servis par les capacités du terminal (11) pour des autorisations de lecture accordées par les ayants droit sur ce type de matériel.

13. Système selon la revendication 10, **caractérisé en ce que** les ensembles périphériques auxquels il est relié comprennent un fichier (16), un clavier (17), un modem (18), un émetteur multifréquences DTMF (Dual Tone Multifrequency) (19), un moniteur (23), un module d'interface réseau NIM (Network interface Module) (22), un afficheur (21), des liaisons (C) avec l'extérieur.

14. Terminal (11) de lecture pour le transfert d'informations d'un moyen de diffusion comprenant des moyens pour recevoir des informations pour le contrôle d'informations de programme (10)
**caractérisé par** :
des moyens pour recevoir d'un centre de gestion (12) lors d'une initialisation des données de codage personnalisées ;
des moyens pour recevoir dudit centre de gestion (12) des informations codées sur des autorisations de lectures de programmes (10) ;
des moyens pour interpréter lesdites informations codées en utilisant lesdites données de codage ;
des moyens pour, lors de la présentation d'un programme (10), vérifier que ledit terminal (11) est autorisé à lire ce programme (10), en fonction des informations interprétées et d'un code d'identification accompagnant ledit programme (10) ;
des moyens pour lire le programme (10) si le terminal (11) de lecture y est autorisé ;
et
des moyens pour après lecture du programme (10) faire informer le centre de gestion (12) des opérations effectuées ;
des moyens pour établir une liaison (A) avec le programme (10) dédié à l'exécution d'une application.

15. Terminal (11) selon la revendication 14, **caractérisé en ce qu'**il comprend une unité centrale (15) reliée à plusieurs ensembles périphériques.

16. Terminal (11) selon la revendication 14 ou 15, **caractérisé en ce que** les ensembles périphériques auxquels il est relié comprennent un fichier (16), un clavier (17), un modem (18), un émetteur multifréquences DTMF (19), un moniteur (23), un module d'interface réseau NIM (Network Interface Module) (22), un afficheur (21), des liaisons (C) avec l'extérieur.

17. Terminal (11) selon l'une des revendications 14 à 16 **caractérisé en ce que** le terminal (11) dispose d'une mémoire sécurisée dont les capacités informatiques sont pour partie chargées directement lors de son initialisation en correspondance avec le centre de gestion (12).

18. Terminal (11) selon l'une des revendications 14 à 17 **caractérisé en ce qu'**il comprend des mémoires additives dans le cas d'applications nécessitant des capacités importantes.

19. Terminal (11) selon l'une des revendications 14 à 18 **caractérisé en ce que** l'unité centrale (15) du terminal (11) est conçue de manière à gérer en autonomie les instructions programmées et mémorise les entrées et sorties exécutées afin de les distribuer lors d'une interrogation ultérieure du centre de gestion (12) ou de l'utilisateur.

20. Terminal (11) selon l'une des revendications 14 à 19 **caractérisé en ce qu'**il comprend des moyens pour ajouter aux données copiées ou diffusées sur le nouveau support un code identifiant en rapport avec les coordonnées d'adressage du terminal (11), en cas de diffusion ou de duplication d'un programme par le terminal (11).

21. Terminal (11) selon l'une des revendications 14 à 20 **caractérisé en ce que** le terminal (11) comprend des moyens pour synchroniser une application avec le centre de gestion (12), qui devient alors serveur au niveau de l'applicatif.

22. Terminal (11) selon l'une des revendications 14 à 21 **caractérisé en ce qu'**il comprend des moyens de transposition du signal initial lors d'un prétraitement puis de formatage de données du flux entrant dans ledit terminal (11).

## Claims

1. A method for the management of information transfers from a transmission means to a reading terminal (11), said reading terminal being locatable, comprising: transmitting program information management information (10) to said reading terminal (11), **characterized in that** it comprises:
- providing customized encoding data to said reading terminal (11) from a management center (12) during an initialization procedure;
- transmitting encoded information on program reading authorizations from said management center (12) to said terminal (11);
- having said encoded information interpreted by said reading terminal (11), using said coding data;
- when a program (10) is presented to said reading terminal (11), having terminal (11) check it is authorized to read said program (10), according to the information which have been interpreted and to an identification code which is transmitted along with said program (10);
- having said program (10) read by said reading terminal (11) if said terminal (11) is authorized to do so;
and
- once said program (10) has been read, having said terminal (11) inform said management center (12) about the operations which have been carried out.

2. Method according to Claim 1, **characterized in that** the program (10) presented to terminal (11) is an identification application order, **in that** the terminal (11) provides an application order to be executed and carries out related operations and acknowledges the same.

3. Process according to Claim 2, **characterized in that,** should the application order require an application answer from the management center (12), the terminal (11) presents to the management center (12) an incoming application order comprising the application response which acts as a query application order for the next application action to be executed.

4. Process according to Claim 2, **characterized in that**, should said application order require no application response from said management center (12), the terminal (11) remains in a position permitting the action to be carried out by means of the program identification (10) issued by the management center (12).

5. Process according to any of the preceding Claims, **characterized in that** application orders have T (Type), L (Length) and V (Value) formats.

6. Process according to Claim 1, **characterized in that** the terminal (11) and the management center (12) are provided with a memory and include at least one microprocessor each.

7. Process according to any of the preceding Claims, **characterized in that** encoding data which are which are shared by both the management center (12) and the reading terminal (11) are preferably personal and at least partially confidential for the user and are never fully exposed to the benefit of a third party, and **in that** part of these data at least are supplied to the terminal (11) before it is operated and apart from any open communication.

8. Process according to any of the preceding Claims, **characterized in that** it carries out a permanent management of data which are unknown to everybody but the management center (12) so that the confidential information which is requested for the good operation are never available or exposed over the used communication media, and **in that** any remaining information, which is exposed, then becomes unusable because it is only partial information and therefore inconsistent for any pirate, to the effect that any carried out transaction can therefore be authenticated by both the management center (12) and the terminal (11).

9. Process according to any of the preceding Claims, **characterized in that** the identified program (10), which is dedicated to the terminal's (11)application contains, along with identification data and its secret features, the triggering off of the application it launches in a synchronized way, along with the terminal (11) and the management center (12).

10. A system comprising a management center (12) and at least one terminal (11) comprising means for the implementation of the process of Claim 1, **characterized in that** it is capable of establishing a connection (B) between said management center (12) and said terminal (11) dedicated to the execution of an application.

11. System according to Claim 10, **characterized in that** it comprises a central processing unit which is connected to a plurality of peripheral devices.

12. System according to Claim 10, **characterized in that** said peripheral devices are fixed or mobile and can be served by the terminal's (11) capacities with regards reading authorizations granted by eligible parties for this type of equipment.

13. System according to Claim 10, **characterized in that** said peripheral devices is connected to comprise: a file (16), a keyboard (17), a modem (18) a DTMF multifrequency transmitter (19), a monitor (23), a network interface module (NIM) (22), a display device (21), and external links (C):

14. Reading terminal (11) for transferring information from a transmission leans comprising means for receiving program information (10) control information, **characterized in that** it comprises :
- means to receive customized encoding data from a management center (12), during an initialization procedure;
- means for interpreting said encoded information using said encoding data ;
- means for checking that said terminal (11) is authorized to read said program (10), according to the information which have been interpreted and to an identification code which is transmitted along with said program (10);
- means for reading said program (10) if the reading terminal (11) is authorized to do so;
and
- means for providing the management center (12) with information about the operations which have been carried out, once the program (10) has been read;
- means for establishing a connection (A) with the program (10), dedicated to the execution of an application.

15. Terminal (11) according to Claim 14, **characterized in that** it comprises a central unit (15) connected to a plurality of peripheral devices.

16. Terminal (11) according to Claims 14 or 15, **characterized in that** the plurality of peripheral devices it is connected to comprise a file (16); a keyboard (17), a modem (18), a DTMF multifrequency transmitter (19), a monitor (23), a network interface module (NIM) (22), a display device (21), and external links (C).

17. Terminal (11) according to any of Claims 14 to 16, **characterized in that** said terminal (11) is provided with a secured memory having data processing capacities, part of which are directly loaded during the initialization so as to ensure matching with said management center (12).

18. Terminal (11) according to any of Claims 14 to 17, **characterized in that** it comprises additional memories in case of applications requiring significant capacities.

19. Terminal (11) according to any of Claims 14 to 18, **characterized in that** the central unit (15) of the terminal (11) is designed to manage in autonomy the programmed instructions in autonomy and memorizes the executed inputs and outputs in order to distribute them during a future query made by the management center (12) or the user.

20. Terminal (11) according to any of Claims 14 to 19, **characterized in that** it comprises means for adding to the data which has been copied or broadcast on the new medium, an identification code related to the addressing coordinates of the terminal (11) should a program be broadcasted or duplicated by the terminal (11).

21. Terminal (11) according to any of Claims 14 to 20, **characterized in that** the terminal (11) comprises means for synchronizing an application with the management center (12) which then becomes a server at the application level.

22. Terminal (11) according to any of Claims 14 to 21, **characterized in that** it comprises means by which the initial signal is transposed during a preprocessing step so as to format flow data entering said terminal (11).

## Patentansprüche

1. Verfahren zur Verwaltung von Informationsübertragungen von einem Verteilungsmittel zu einem insbesondere lokalisierbaren Leseendgerät (11), bei welchem dem Leseendgerät (11) Informationen zur Überprüfung von Programminformationen (10) übermittelt werden, **dadurch gekennzeichnet dass** es folgende Schritte umfasst :
- Bereitstellen personalisierter Verschlüsselungsdaten durch ein Verwaltungszentrum (12) an das Leseendgerät (11) bei einer Initialisierung;
- Übermittlung verschlüsselter, Leseberechtigungen für die Programme betreffender Informationen vom Verwaltungszentrum (12) zum Leseendgerät (11);
- Veranlassen der Auswertung der verschlüsselten Informationen durch das Leseendgerät (11) unter Nutzung der Verschlüsselungsdaten;
- bei Vorlage eines Programms (10) am Leseendgerät (11), veranlassen, dass das Leseendgerät (11) nachprüft, dass es zum Lesen dieses Programms (10) berechtigt ist, und zwar in Abhängigkeit von den ausgewerteten Informationen und einem mit dem Programm (10) verbundenen Erkennungscode;
- falls es dazu berechtigt ist, Veranlassen des Leseendgeräts (11), das Programm (10) zu lesen;
und
- nach dem Lesen des Programms (10), Veranlassen des Leseendgeräts (11), das Verwaltungszentrum (12) über die ausgeführten Arbeitsgänge zu unterrichten.

2. Verfahren nach Anspruch 1, **dadurch gekennzeichnet dass** das Programm (10) dem Endgerät (11) einen applikativen Identifizierungsbefehl vorlegt, dass das Endgerät (11) einen auszuführenden applikativen Befehl abgibt, die damit verbundenen Arbeitsgänge ausführt und sie bestätigt.

3. Verfahren nach Anspruch 2, **dadurch gekennzeichnet dass** in dem Fall, dass der applikative Befehl eine applikative Antwort vom Verwaltungszentrum (12) erfordert, das Endgerät (11) dem Verwaltungszentrum (12) einen eingehenden, die applikative Antwort enthaltenden applikativen Befehl vorlegt, der als applikativer Anfragebefehl für den folgenden auszuführenden applikativen Vorgang dient.

4. Verfahren nach Anspruch 2, **dadurch gekennzeichnet dass** in dem Fall, dass der applikative Befehl keine applikative Antwort vom Verwaltungszentrum (12) erfordert, das Endgerät (11) weiterhin einen Vorgang anfordert, welcher mittels der Identifizierung des Programms (10) vom Verwaltungszentrum (12) auszuführen ist.

5. Verfahren nach einem der vorhergehenden Ansprüche, **dadurch gekennzeichnet dass** die applikativen Befehle die Formate T (Typ), L (Länge) und V (Wert) haben.

6. Verfahren nach Anspruch 1, **dadurch gekennzeichnet dass** das Endgerät (11) und das Verwaltungszentrum (12) über einen Speicher verfügen und jeweils wenigstens einen Mikroprozessor umfassen.

7. Verfahren nach einem der vorhergehenden Ansprüche, **dadurch gekennzeichnet dass** die dem Verwaltungszentrum (12) und dem Leseendgerät (11) gemeinsamen Verschlüsselungsdaten persönlicher Art und zumindest teilweise für den Nutzer vertraulich sind und in keinem Fall zugunsten Dritter vollständig offenbart werden, wobei mindestens ein Teil dieser Daten dem Endgerät (11) vor seiner Inbetriebnahme, unabhängig von jedweder hergestellten Kommunikation zur Verfügung gestellt wird.

8. Verfahren nach einem der vorhergehenden Ansprüche, **dadurch gekennzeichnet dass** es die fortlaufende Verwaltung der Daten umfasst, die ausser dem Verwaltungszentrum (12) allen Teilnehmern unbekannt sind, derart dass die vertraulichen, für den Betrieb unerlässlichen Informationen zu keinem Zeitpunkt auf den verwendeten Kommunikationsmitteln verfügbar sind oder offenbart werden, wobei die verbleibenden offenbarten Informationen aufgrund ihrer teilweisen Kürzung unbrauchbar und damit für einen Betrüger inkohärent werden, wobei die durchgeführten Transaktionen durch das Verwaltungszentrum (12) und das Endgerät (11) authentifiziert werden.

9. Verfahren nach einem der vorhergehenden Ansprüche, **dadurch gekennzeichnet dass** das identifizierte, für die Anwendung des Endgeräts (11) bestimmte Programm (10) ausser den Identifizierungsdaten und den geheimen Elementen die Auslösung der Anwendung umfasst, die es synchron mit dem Endgerät (11) und dem Verwaltungszentrum (12) abwickelt.

10. System mit einem Verwaltungszentrum (12) und wenigstens einem Endgerät (11) mit Mitteln zur Durchführung des Verfahrens nach Anspruch 1, **dadurch gekennzeichnet dass** es fähig ist, eine Verbindung (B) zwischen dem Verwaltungszentrum (12) und dem für die Ausführung einer Anwendung bestimmten Endgerät (11) herzustellen.

11. System nach Anspruch 10, **dadurch gekennzeichnet dass** es eine mit mehreren Peripheriegeräten verbundene Zentraleinheit umfasst.

12. System nach Anspruch 10, **dadurch gekennzeichnet dass** die Peripheriegeräte fest oder beweglich sind und von dem Leistungsvermögen des Endgeräts (11) für bei dieser Materialart durch die autorisierten Personen erteilten Leseberechtigungen unterstützt werden.

13. System nach Anspruch 10, **dadurch gekennzeichnet dass** die Peripheriegeräte, mit denen es verbunden ist, eine Datei (16), eine Tastatur (17), ein Modem (18), einen Mehrfrequenzsender DTMF (Dual Tone Multifrequency) (19), einen Bildschirm (23), einen Netzwerk-Interface-Modul NIM (Network Interface Module) (22), ein Anzeigemittel (21) und Anschlüsse (C) nach aussen umfassen.

14. Leseendgerät (11) für die Informationsübertragung von einem Verteilungsmittel, mit Mitteln zum Empfang von Informationen zur Überprüfung von Informationen des Programms (10), **gekennzeichnet durch**
Mittel zum Empfangen von personalisierten Verschlüsselungsdaten von einem Verwaltungszentrum (12) bei einer Initialisierung;
Mittel zum Empfangen von verschlüsselten Informationen bezüglich Leseberechtigungen von Programmen (10) vom Verwaltungszentrum;
Mittel zur Auswertung der verschlüsselten Informationen unter Nutzung der Verschlüsselungsdaten;
Mittel, um bei Vorlage eines Programms (10) nachzuprüfen, dass das Endgerät (11) zum Lesen dieses Programms (10) berechtigt ist, und zwar in Abhängigkeit von den ausgewerteten Informationen und einem dem Programm (10) beigegebenen Erkennnungscode;
Mittel zum Lesen des Programms (10), wenn das Leseendgerät (11) dazu berechtigt ist;
und
Mittel, um nach dem Lesen des Programms (10) das Verwaltungszentrum (12) über die ausgeführten Arbeitsgänge zu unterrichten;
Mittel zum Herstellen einer Verbindung (A) mit dem für die Ausführung einer Anwendung bestimmten Programm (10).

15. Endgerät (11) nach Anspruch 14, **dadurch gekennzeichnet dass** es eine mit mehreren Peripheriegeräten verbundene Zentraleinheit (15) umfasst.

16. Endgerät (11) nach Anspruch 14 oder 15, **dadurch gekennzeichnet dass** die Peripheriegeräte, mit denen es verbunden ist, eine Datei (16), eine Tastatur (17), ein Modem (18), einen Mehrfrequenzsender DTMF (19), einen Bildschirm (23), einen Netzwerk-Interface-Modul NIM (Network Interface Module) (22), ein Anzeigemittel (21) und Anschlüsse (C) nach aussen umfassen.

17. Endgerät (11) nach einem der Ansprüche 14 bis 16, **dadurch gekennzeichnet dass** das Endgerät (11) über einen gesicherten Speicher verfügt, dessen informatische Leistungen zum Teil unmittelbar bei seiner Initialisierung in Übereinstimmung mit dem Verwaltungszentrum (12) geladen werden.

18. Endgerät (11) nach einem der Ansprüche 14 bis 17, **dadurch gekennzeichnet dass** es im Fall von umfangreiches Leistungsvermögen erfordernden Anwendungen Zusatzspeicher umfasst.

19. Endgerät (11) nach einem der Ansprüche 14 bis 18, **dadurch gekennzeichnet dass** die Zentraleinheit (15) des Endgeräts (11) dazu ausgelegt ist, die programmierten Anweisungen off-line zu verwalten, und die vorgenommenen Ein- und Ausgaben speichert, um sie bei einer späteren Anfrage des Verwaltungszentrums (12) oder des Nutzers zu verteilen.

20. Endgerät (11) nach einem der Ansprüche 14 bis 19, **dadurch gekennzeichnet dass** es Mittel umfasst, um den auf dem neuen Träger kopierten oder verteilten Daten im Fall der Verteilung oder Duplizierung eines Programms durch das Endgerät (11) einen in Bezug zu den Adressierungsangaben des Endgeräts (11) stehenden Erkennungscode beizugeben.

21. Endgerät (11) nach einem der Ansprüche 14 bis 20, **dadurch gekennzeichnet dass** das Endgerät (11) Mittel zur Synchronisierung einer Anwendung mit dem Verwaltungszentrum (12) umfasst, wobei letzteres bezüglich des Anwendungsprogramms zum Server wird.

22. Endgerät (11) nach einem der Ansprüche 14 bis 21, **dadurch gekennzeichnet dass** es Mittel für die Umsetzung des ursprünglichen Signals bei einer Vorbehandlung sowie für die Formatierung von Daten des in das Endgerät (11) eintretenden Flusses enthält.
